# EUROPÄISCHE PATENTANMELDUNG

(11) **EP 3 922 962 A1**
(43) Veröffentlichungstag der Anmeldung: **15.12.2021**
(21) Anmeldenummer: 20179377.5
(22) Anmeldetag: 10.06.2020
(51) Int. Cl.: G01F 23/288, G01F 25/00, G01N 9/24

(54) **VERFAHREN ZUM KALIBRIEREN EINER VORRICHTUNG ZUM MESSEN EINES PROZESSWERTS MINDESTENS EINES STOFFES, VERFAHREN ZUM MESSEN EINES PROZESSWERTS MINDESTENS EINES STOFFES MITTELS EINER VORRICHTUNG UND SYSTEM**

(71) Anmelder: Berthold Technologies GmbH & Co. KG, 75323 Bad Wildbad (DE)
(72) Erfinder: Müller, Dr. Steffen, 75173 Pforzheim (DE)
(74) Vertreter: Patentanwälte Ruff, Wilhelm, Beier, Dauster & Partner mbB

(57) **Zusammenfassung**

Die Erfindung betrifft ein Verfahren zum Kalibrieren einer Vorrichtung (1) zum Messen eines Prozesswerts (PW) mindestens eines Stoffes (ST),
- wobei die Vorrichtung (1) eine Detektoreinrichtung (2) aufweist, wobei die Detektoreinrichtung (2) zum Messen eines Detektorwerts (DW) mittels Erfassens mindestens von Gammastrahlen (GR), wobei die Gammastrahlen (GR) mindestens den Stoff (ST) mindestens teilweise durchdrungen und dabei gestreut haben, und Erzeugens des Detektorwerts (DW) basierend auf den erfassten Gammastrahlen (GR) ausgebildet ist,
- wobei das Verfahren den Schritt aufweist: Berechnen einer Kalibrierzuordnung (KT) mindestens mittels Simulierens des Durchdringens und dabei modellierend die Streuung (SC) der Gammastrahlen (GR), wobei die Kalibrierzuordnung (KT) verschiedenen Prozesswerten (PW) jeweils einen Detektorwert (DW) zuordnet.

## Beschreibung

Die Erfindung betrifft ein Verfahren zum Kalibrieren einer Vorrichtung zum Messen eines Prozesswerts mindestens eines Stoffes, ein Verfahren zum Messen eines Prozesswerts mindestens eines Stoffes mittels einer Vorrichtung und ein, insbesondere zugehöriges, System.

Radiometrische Messsysteme können beispielsweise verwendet werden, um einen Prozesswert wie beispielsweise einen Füllstand oder eine Dichte zu messen. Hierzu werden Messwerte bzw. Detektorwerte aufgenommen, welche über eine geeignete Kalibrierung umgerechnet werden können. Derartige Kalibrierungen werden bei bekannten Vorgehensweisen typischerweise in einer finalen Einbausituation, in der Regel beim Kunden, durch- bzw. ausgeführt. Hierfür ist typischerweise mindestens ein Prozesswert zu realisieren, wobei beispielsweise ein Füllstand angefahren wird oder eine Dichte im Labor gemessen wird, so dass eine Zählrate hierfür aufgenommen werden kann. Je mehr unterschiedliche Prozesswerte zur Kalibrierung verwendet werden können, desto besser kann das System kalibriert werden.

In der Realität ist es aber oft nicht möglich oder übermäßig aufwändig, beliebig verschiedene Prozesswerte anzufahren. Deshalb bestehen typische Kalibrierungen aus wenigen Kalibrierpunkten und einer Modellannahme wie beispielsweise linear oder exponentiell. Die Zuordnung des Prozesswerts wird dann über eine modellgerechte Interpolation zwischen den vorhandenen Kalibrierpunkten realisiert. Im Extremfall sind Kalibrierungen mit nur einem Wert realisiert, welche auch als Ein-Punkt-Kalibrierung bezeichnet werden können. Dies kann beispielsweise verwendet werden, wenn ein laufender Prozess nicht unterbrochen werden kann.

Jegliche Abweichung zur Modellannahme stellt einen Messfehler dar, der durch eine gute Kalibrierung hätte vermieden werden können. Die Abweichungen werden umso größer, je weniger Kalibrierpunkte gemessen werden können.

Eine Modellannahme kann beispielsweise darauf basieren, dass nur mono-energetische Gammastrahlen zum Messeffekt beitragen. Dies sind beispielsweise alle Gammastrahlen, die nicht gestreut haben und damit noch die volle Energie der emittierenden Strahlungsquelle, insbesondere des emittierenden Isotops, haben. Die Anzahl der, insbesondere nicht-gestreuten, Gammastrahlen kann exakt, analytisch in Abhängigkeit des Prozesswerts wie Füllstand oder Dichte vorberechnet werden. Allerdings wurde erkannt, dass sowohl beim Vorberechnen als auch beim, insbesondere echten, Messen nur mono-energetischer bzw. nicht-gestreuter Gammastrahlen typischerweise nur eine geringe Zählrate auftritt, da die Mehrheit der Gammastrahlen gestreut hat, bevor sie die Detektoreinrichtung erreichen. Dadurch reduziert sich auch die Messstatistik.

Letztlich wird deshalb bei bekannten Ausführungen typischerweise ein Kompromiss zwischen Aufwand bei der Inbetriebnahme, Messstatistik und Messgenauigkeit in Kauf genommen.

### AUFGABE UND LÖSUNG

Es ist deshalb eine Aufgabe der Erfindung, ein Verfahren bereitzustellen, welches im Vergleich zu bekannten Ausführungen alternativ oder besser ausgeführt ist, welches beispielsweise eine hohe Genauigkeit der Kalibrierung ermöglicht. Es ist des Weiteren eine Aufgabe der Erfindung, ein, insbesondere zugehöriges, Verfahren zum Messen eines Prozesswerts mindestens eines Stoffes mittels einer Vorrichtung bereitzustellen. Außerdem ist es eine Aufgabe der Erfindung, ein, insbesondere zugehöriges, System bereitzustellen.

Dies wird erfindungsgemäß durch ein Verfahren nach Anspruch 1, ein Verfahren nach Anspruch 13 sowie ein System nach Anspruch 14 erreicht. Vorteilhafte Ausgestaltungen sind in den Unteransprüchen beansprucht.

Die Erfindung betrifft ein, insbesondere automatisches, Verfahren zum, insbesondere automatischen, Kalibrieren einer, insbesondere elektrischen und/oder radiometrischen, Vorrichtung zum Messen eines, insbesondere unbekannten, Prozesswerts mindestens eines Stoffes.

Die Vorrichtung umfasst bzw. weist eine, insbesondere elektrische und/oder gammaenergiesensitive, Detektoreinrichtung auf, wobei die Detektoreinrichtung zum, insbesondere automatischen, Messen eines Detektorwerts mittels, insbesondere automatischen und/oder gammaenergiesensitiven, Erfassens mindestens von Gammastrahlen, wobei die Gammastrahlen mindestens den Stoff mindestens teilweise bzw. abschnittsweise durchdrungen und dabei, insbesondere bei dem Durchdringen, gestreut haben, und, insbesondere automatischen, Erzeugens des Detektorwerts basierend auf den erfassten Gammastrahlen ausgebildet bzw. konfiguriert ist.

Das Verfahren umfasst bzw. weist den folgenden Schritt auf:
Berechnen, insbesondere automatisches Berechnen, einer Kalibrierzuordnung bzw. einer Kalibriertabelle mindestens mittels Simulierens, insbesondere automatischen Simulierens, des Durchdringens und dabei, insbesondere bei dem Simulieren, modellierend die Streuung der Gammastrahlen, wobei die Kalibrierzuordnung verschiedenen, insbesondere unbekannten, Prozesswerten jeweils einen, insbesondere verschiedenen, Detektorwert zuordnet.

In anderen Worten: Berechnen der Kalibrierzuordnung mittels eines, insbesondere mathematischen, Prozessmodells, wobei das Prozessmodell das Durchdringen und dabei modellierend die Streuung der Gammastrahlen simuliert.

Dies ermöglicht, dass die Kalibrierzuordnung, insbesondere für die Mehrheit der Gammastrahlen, realistisch sein kann. Somit ermöglicht dies das Messen des Prozesswerts mit einer hohen Messgenauigkeit und einer hohen statistischen Genauigkeit.

Insbesondere kann statt von einem Stoff beispielsweise auch von einem Material gesprochen werden.

Die Detektoreinrichtung kann beispielsweise mindestens einen Photomultiplier, insbesondere mindestens einen Silizium-Photomultiplier, aufweisen.

Die Detektoreinrichtung kann zum Messen des Detektorwerts mittels Erfassens zusätzlich von Gammastrahlen, wobei die Gammastrahlen mindestens den Stoff mindestens teilweise durchdrungen und dabei nicht gestreut haben, insbesondere und Erzeugens des Detektorwerts basierend auf den erfassten Gammastrahlen, ausgebildet sein. Weiter zusätzlich oder alternativ kann das Verfahren aufweisen: Berechnen der Kalibrierzuordnung mittels Simulierens des Durchdringens der, insbesondere nicht-gestreuten bzw. ungestreuten, Gammastrahlen, insbesondere ohne Modellierung.

Das Verfahren kann aufweisen: Berechnen der Kalibrierzuordnung mittels Simulierens des Durchdringens und dabei modellierend Absorption, insbesondere mindestens durch den Photo-Effekt, von, insbesondere gestreuten, Gammastrahlen.

Das Simulieren, insbesondere des Durchdringens und dabei modellierend die Streuung der Gammastrahlen, kann mittels eines Computers, insbesondere parallelisierter Rechnerstrukturen, ausgeführt werden.

Das Berechnen, insbesondere das Simulieren des Durchdringens und dabei modellierend die Streuung der Gammastrahlen, kann für verschiedene Prozesswerte, insbesondere jeweils, ausgeführt werden.

Bezüglich des Berechnens, insbesondere des Simulierens des Durchdringens und dabei modellierend die Streuung der Gammastrahlen, wird auf die Fachliteratur und/oder auf nachher Folgendes verwiesen.

Gemäß einer Ausführung können die Gammastrahlen einen Hohlkörper mindestens teilweise bzw. abschnittsweise durchdrungen und dabei gestreut haben, wobei der Stoff innerhalb des Hohlkörpers angeordnet sein kann. Dies ermöglicht, dass die Kalibrierzuordnung besonders realistisch sein kann.

Gemäß einer Ausführung können die Gammastrahlen an dem Stoff und/oder dem Hohlkörper, soweit vorhanden, gestreut haben. Zusätzlich oder alternativ kann das Verfahren umfassen bzw. aufweisen: modellierend die Streuung der Gammastrahlen an dem Stoff und/oder dem Hohlkörper, soweit vorhanden. Dies ermöglicht, dass das Berechnen, insbesondere das Simulieren des Durchdringens und dabei modellierend die Streuung der Gammastrahlen, besonders realistisch sein kann. Somit ermöglicht dies, dass die Kalibrierzuordnung besonders realistisch sein kann.

Gemäß einer Ausführung können die Gammastrahlen mindestens durch Compton-Streuung bzw. den Compton-Effekt gestreut haben. Zusätzlich oder alternativ kann das Verfahren umfassen bzw. aufweisen: modellierend die Streuung der Gammastrahlen mindestens durch Compton-Streuung bzw. den Compton-Effekt. Dies ermöglicht, dass das Berechnen, insbesondere das Simulieren des Durchdringens und dabei modellierend die Streuung der Gammastrahlen, besonders realistisch sein kann. Somit ermöglicht dies, dass die Kalibrierzuordnung besonders realistisch sein kann.

Gemäß einer Ausführung kann das Simulieren, insbesondere des Durchdringens und dabei modellierend die Streuung der Gammastrahlen, mindestens mittels einer Monte-Carlo-Simulation bzw. eines Monte-Carlo-Verfahrens ausgeführt werden. Dies ermöglicht, dass die Kalibrierzuordnung besonders realistisch sein kann. Insbesondere bezüglich der Monte-Carlo-Simulation wird auf die Fachliteratur und/oder auf nachher Folgendes verwiesen.

Gemäß einer Ausführung kann die Detektoreinrichtung mindestens einen Szintillator zum Erfassen der Gammastrahlen aufweisen bzw. umfassen. Insbesondere kann der Szintillator eine Dichte von minimal 3 Gramm pro Kubikzentimeter (g/cm³), insbesondere von minimal 5 g/cm³, und/oder von maximal 20 g/cm³, insbesondere von maximal 10 g/cm³, insbesondere von 7 g/cm³, aufweisen bzw. haben. Insbesondere kann der Szintillator teilweise oder vollständig aus mindestens einem Element mit Ordnungszahl (Z) gleich oder größer als 31, 39, 48, 53, 55 oder 57 bestehen. Derartige Dichten, insbesondere derartige Elemente, haben sich für die hier relevanten Detektionszwecke als vorteilhaft erwiesen, insbesondere da in diesen die jeweilige Energie von Gammastrahlen mit einer höheren Wahrscheinlichkeit vollständig deponiert wird. Dies ermöglicht, dass das Erfassen nicht, insbesondere im Detail, berücksichtigt, insbesondere simuliert, zu werden braucht. Insbesondere kann Bismutgermanat (BiGeO) und/oder Lanthanbromid (LaBr) und/oder Cäsiumiodid (Csl) und/oder Lutetiumyttriumoxyorthosilikat (LuYSiO) und/oder Cadmiumwolframat (CdWo) und/oder Gadoliniumaluminiumgalliumoxid (GdAIGaO) verwendet werden. Sie können beispielsweise alleine oder auch kombiniert in der Detektoreinrichtung verwendet werden.

Gemäß einer Ausführung kann die Detektoreinrichtung ein Detektor-Rauschen mit einem Rausch-Energiewert umfassen bzw. aufweisen und zum Messen des Detektorwerts nur bzw. ausschließlich basierend auf erfassten Gammastrahlen, deren Gamma-Energien, insbesondere Gamma-Energie-Werte, gleich oder größer, insbesondere und nicht kleiner, als ein Energieschwellenwert sein können, wobei der Energieschwellenwert gleich oder größer als der Rausch-Energiewert sein kann, ausgebildet bzw. konfiguriert sein. Dies ermöglicht zu vermeiden, dass das Detektor-Rauschen das Messen bzw. die Messung verfälschen kann.

Gemäß einer Ausführung können die Gammastrahlen mit, insbesondere nur, einer, insbesondere einzigen, diskreten Isotop-Gamma-Energie, insbesondere einem diskreten Isotop-Gamma-Energie-Wert, in mindestens den Stoff, insbesondere und den Hohlkörper, soweit vorhanden, mittels mindestens einer Strahlungsquelle emittiert sein, insbesondere werden. Dies ermöglicht, dass das Berechnen einfach sein kann, insbesondere da vor einem ersten Streuungs-Ereignis alle Gammastrahlen dieselbe Isotop-Gamma-Energie aufweisen bzw. haben. Insbesondere sei erwähnt, dass auch in der Strahlungsquelle verwendete Isotope nicht nur eine Energie haben können, sondern beispielsweise auch zwei diskrete Energien haben können, insbesondere wobei die zwei diskreten Energien derart nah bei einander sein können, dass sie als eine diskrete Energie bezüglich des Berechnens, insbesondere des Simulierens des Durchdringens und dabei modellierend die Streuung der Gammastrahlen, behandelt werden können, wie z.B. für Kobalt 60. Es können auch Mischisotope verwendet werden.

Gemäß einer Ausführung kann das Verfahren den folgenden Schritt umfassen bzw. aufweisen: Vorgeben, insbesondere automatisches Vorgeben, insbesondere Eingeben, mindestens einer anwendungsspezifischen Materialeigenschaft, insbesondere einer anwendungsspezifischen Information über die Materialeigenschaft, mindestens einer anwendungsspezifischen Messgeometrie, insbesondere einer anwendungsspezifischen Information über die Messgeometrie, mindestens einer anwendungsspezifischen Abmessung, insbesondere eines anwendungsspezifischen Werts der Abmessung, bzw. Größe und/oder mindestens einer anwendungsspezifischen Position, insbesondere eines anwendungsspezifischen Werts der Position, insbesondere jeweils, des Stoffes, des Hohlkörpers, soweit vorhanden, der Detektoreinrichtung, insbesondere eines Gehäuses und/oder einer Abschirmung der Detektoreinrichtung, insbesondere des Szintillators, und/oder der Strahlungsquelle, insbesondere einer Abschirmung der Strahlungsquelle, soweit vorhanden, insbesondere durch einen Inbetriebnehmer bzw. Kalibrierer der Vorrichtung. Das Simulieren, insbesondere des Durchdringens und dabei modellierend die Streuung der Gammastrahlen, kann basierend auf bzw. in Abhängigkeit der anwendungsspezifischen Vorgabe, insbesondere der anwendungsspezifischen Eingabe, ausgeführt werden. Dies ermöglicht, dass die Kalibrierzuordnung anwendungsspezifisch und somit besonders realistisch sein kann. Insbesondere kann die Materialeigenschaft eine chemische Zusammensetzung und/oder eine Dichte aufweisen, insbesondere sein.

Gemäß einer Ausführung kann der Detektorwert ein Zählratenwert oder von dem Zählratenwert abhängig, insbesondere zu dem Zähratenwert proportional, sein. Beispielsweise können innerhalb eines bestimmten Zeitintervalls auftreffende Gammastrahlen bzw. -quanten erfasst und daraus der Zählratenwert gebildet werden. Je nach Anwendungsfall kommen in einem bestimmten Zeitintervall entweder umso mehr oder umso weniger Gammastrahlen bzw. -quanten an je weniger diese gestreut haben.

Gemäß einer Ausführung kann der Prozesswert ein Füllstandwert oder ein Dichtewert sein. Für derartige Prozesswerte hat sich das hier beschriebene Verfahren als besonders vorteilhaft erwiesen. Auch andere Prozesswerte können jedoch verwendet werden.

Gemäß einer Ausführung kann das Verfahren den folgenden Schritt umfassen bzw. aufweisen: bei, insbesondere mindestens und/oder nur, einem, insbesondere einzigen, bekannten Prozesswert Messen, insbesondere automatisches Messen, insbesondere mindestens und/oder nur, eines, insbesondere einzigen, Detektorwerts, insbesondere mindestens basierend auf erfassten Gammastrahlen, wobei die Gammastrahlen gestreut haben, insbesondere mittels der Detektoreinrichtung. Die Kalibrierzuordnung kann basierend auf, insbesondere nur, dem, insbesondere einzigen, gemessenen Detektorwert, insbesondere und, insbesondere nur, dem, insbesondere einzigen, bekannten Prozesswert, berechnet, insbesondere normiert bzw. skaliert, werden. Dies ermöglicht, dass die Kalibrierzuordnung besonders realistisch sein kann, insbesondere trotz einer möglicherweise nicht ganz genauen bzw. exakten anwendungsspezifischen Vorgabe. Insbesondere kann der bekannte Prozesswert, insbesondere braucht aber nicht, von Null verschieden, insbesondere größer Null, sein. Zusätzlich oder alternativ kann die Kalibrierzuordnung dem bekannten Prozesswert den gemessenen Detektorwert zuordnen. Weiter zusätzlich oder alternativ, insbesondere zu dem Normieren, kann das Simulieren, insbesondere des Durchdringens und dabei modellierend die Streuung der Gammastrahlen, basierend auf dem gemessenen Detektorwert bzw. in Abhängigkeit des gemessen Detektorwerts ausgeführt werden, insbesondere derart, dass bei dem bzw. für den bekannten Prozesswert der gemessene Detektorwert als Ziel-Ergebnis bzw. Ziel-Ausgabe des Simulierens erreicht wird, insbesondere durch Rückführen des gemessenen Detektorwerts. Insbesondere kann von der anwendungsspezifischen Vorgabe mindestens teilweise basierend auf dem gemessenen Detektorwert bzw. in Abhängigkeit des gemessen Detektorwerts abgewichen werden bzw. die anwendungsspezifische Vorgabe kann mindestens teilweise basierend auf dem gemessenen Detektorwert bzw. in Abhängigkeit des gemessen Detektorwerts verändert werden. Dies ermöglicht, dass die Kalibrierzuordnung ganz besonders realistisch sein kann, insbesondere im Unterschied zu dem Normieren. Weiter zusätzlich oder alternativ kann das Verfahren den folgenden Schritt umfassen bzw. aufweisen: Emittieren, insbesondere automatisches Emittieren, der Gammastrahlen mit, insbesondere nur, einer, insbesondere der, insbesondere einzigen, diskreten Isotop-Gamma-Energie, insbesondere einem diskreten Isotop-Gamma-Energie-Wert, in mindestens den Stoff, insbesondere und den Hohlkörper, soweit vorhanden, mittels mindestens einer, insbesondere der mindestens einen, Strahlungsquelle.

Die Erfindung betrifft des Weiteren ein, insbesondere automatisches, Verfahren zum, insbesondere automatischen, Messen eines, insbesondere des, Prozesswerts mindestens eines, insbesondere des mindestens einen, Stoffes mittels einer, insbesondere der, Vorrichtung, wobei das Verfahren Folgendes aufweist bzw. umfasst:
- ein, insbesondere das, Verfahren zum Kalibrieren der Vorrichtung wie zuvor beschrieben, und, insbesondere zeitlich danach,
- Messen, insbesondere automatisches Messen, des Prozesswerts mittels Messens, insbesondere automatischen Messens, des Detektorwerts und Bestimmens, insbesondere automatischen Bestimmens, des Prozesswerts mittels der, insbesondere berechneten, Kalibrierzuordnung basierend auf dem gemessenen Detektorwert, insbesondere mittels der, insbesondere kalibrierten, Vorrichtung.

Insbesondere kann das Verfahren den folgenden Schritt umfassen bzw. aufweisen: Emittieren, insbesondere automatisches Emittieren, der Gammastrahlen mit, insbesondere nur, einer, insbesondere der, insbesondere einzigen, diskreten Isotop-Gamma-Energie, insbesondere einem diskreten Isotop-Gamma-Energie-Wert, in mindestens den Stoff, insbesondere und den Hohlkörper, soweit vorhanden, mittels mindestens einer, insbesondere der mindestens einen, Strahlungsquelle.

Die Erfindung betrifft des Weiteren ein, insbesondere elektrisches und/oder radiometrisches, System, insbesondere Messsystem, wobei das System eine, insbesondere die, Vorrichtung zum Messen eines, insbesondere des, Prozesswerts mindestens eines, insbesondere des mindestens einen, Stoffes aufweist, und wobei das System zum, insbesondere automatischen, Ausführen eines, insbesondere des, Verfahrens wie zuvor beschrieben ausgebildet bzw. konfiguriert ist.

Mittels des beschriebenen Systems kann das erfindungsgemäße Verfahren in vorteilhafter Weise ausgeführt werden. Die bereits beschriebenen Vorteile können dabei erreicht werden.

Bezüglich des Verfahrens kann dabei auf alle zuvor beschriebenen Ausführungen zurückgegriffen werden.

Insbesondere kann das System einen, insbesondere den, Computer, insbesondere parallelisierte Rechnerstrukturen, insbesondere zu dem Simulieren, insbesondere des Durchdringens und dabei modellierend die Streuung der Gammastrahlen, aufweisen bzw. umfassen.

Gemäß einer Ausführung kann das System einen, insbesondere den, Hohlkörper und/oder mindestens eine, insbesondere die mindestens eine, Strahlungsquelle aufweisen bzw. umfassen, welche zum Emittieren von, insbesondere den, Gammastrahlen mit einer, insbesondere der, diskreten Isotop-Gamma-Energie in mindestens den Stoff ausgebildet bzw. konfiguriert ist. Insbesondere kann der Hohlkörper einen Behälter, insbesondere ein Rohr, aufweisen, insbesondere sein.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Ansicht eines erfindungsgemäßen Systems aufweisend eine Vorrichtung und eines erfindungsgemäßen Verfahrens zum Kalibrieren der Vorrichtung und eines erfindungsgemäßen Verfahrens zum Messen mittels der Vorrichtung,
- Fig. 2: ein Ablaufdiagramm des Verfahrens zum Kalibrieren der Fig. 1,
- Fig. 3: eine unnormierte Kalibrierzuordnung von Detektorwerten zu Prozesswerten berechnet mittels des Verfahrens zum Kalibrieren der Fig. 1,
- Fig. 4: die Kalibrierzuordnung der Fig. 3 normiert mittels des Verfahrens zum Kalibrieren der Fig. 1, und
- Fig. 5: ein Energiespektrum von Gammastrahlen.

### DETAILLIERTE BESCHREIBUNG DER AUSFÜHRUNGSBEISPIELE

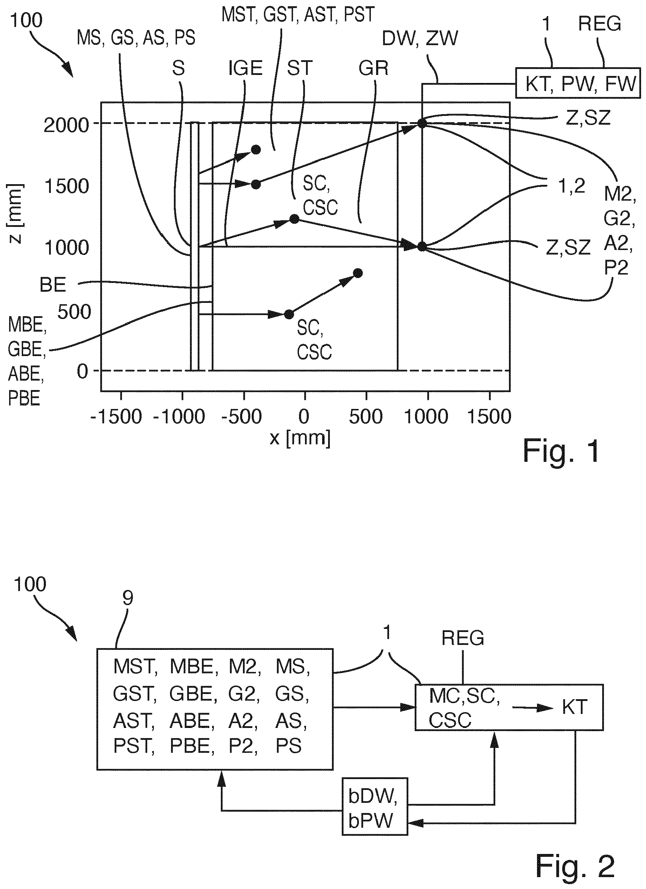

Fig. 1 zeigt ein erfindungsgemäßes System 100. Das System 100 weist eine Vorrichtung 1 zum Messen eines Prozesswerts PW mindestens eines Stoffes ST, insbesondere angeordnet innerhalb eines Hohlkörpers BE, auf.

Im Detail weist das System 100 den Hohlkörper BE auf.

Zusätzlich weist das System 100 mindestens eine Strahlungsquelle S, in dem gezeigten Ausführungsbeispiel nur eine einzige Strahlungsquelle und/oder in Form einer Stabstrahlungsquelle, auf, welche zum Emittieren von Gammastrahlen GR mit einer diskreten Isotop-Gamma-Energie IGE in mindestens den Stoff ST ausgebildet ist.

In dem gezeigten Ausführungsbeispiel wird für die mindestens eine Strahlungsquelle S Cäsium 137 (Cs 137) verwendet. Somit ist die diskrete Isotop-Gamma-Energie IGE 662 keV.

Des Weiteren weist die Vorrichtung 1 eine Detektoreinrichtung 2 auf. Die Detektoreinrichtung 2 ist zum Messen eines Detektorwerts DW mittels Erfassens mindestens von Gammastrahlen GR, wobei die Gammastrahlen GR mindestens den Stoff ST mindestens teilweise, insbesondere und den Hohlkörper BE mindestens teilweise, durchdrungen und dabei gestreut haben, insbesondere mehrfach, und Erzeugens des Detektorwerts DW basierend auf den erfassten Gammastrahlen GR ausgebildet.

Im Detail weist die Detektoreinrichtung 2 mindestens einen Szintillator SZ, in dem gezeigten Ausführungsbeispiel zwei Szintillatoren SZ, zum Erfassen der Gammastrahlen GR auf. Insbesondere weist der Szintillator SZ eine Dichte von minimal 3 g/cm³, insbesondere von minimal 5 g/cm³, und/oder von maximal 20 g/cm³, insbesondere von maximal 10 g/cm³, insbesondere von 7 g/cm³, auf.

Außerdem ist der Detektorwert DW ein Zählratenwert ZW oder von dem Zählratenwert abhängig, wie in Fig. 1 und 3 bis 5 gezeigt.

Weiter ist der Prozesswert PW ein Füllstandwert FW oder ein Dichtewert.

In dem gezeigten Ausführungsbeispiel befindet sich die mindestens eine Strahlungsquelle S auf einer Seite, insbesondere Umfangsseite, des Hohlkörpers BE. Auf einer anderen, insbesondere gegenüberliegenden, Seite, insbesondere Umfangsseite, des Hohlkörpers BE befindet sich die Detektoreinrichtung 2.

Zudem ist das System 100 zum Ausführen eines erfindungsgemäßen Verfahrens ausgebildet.

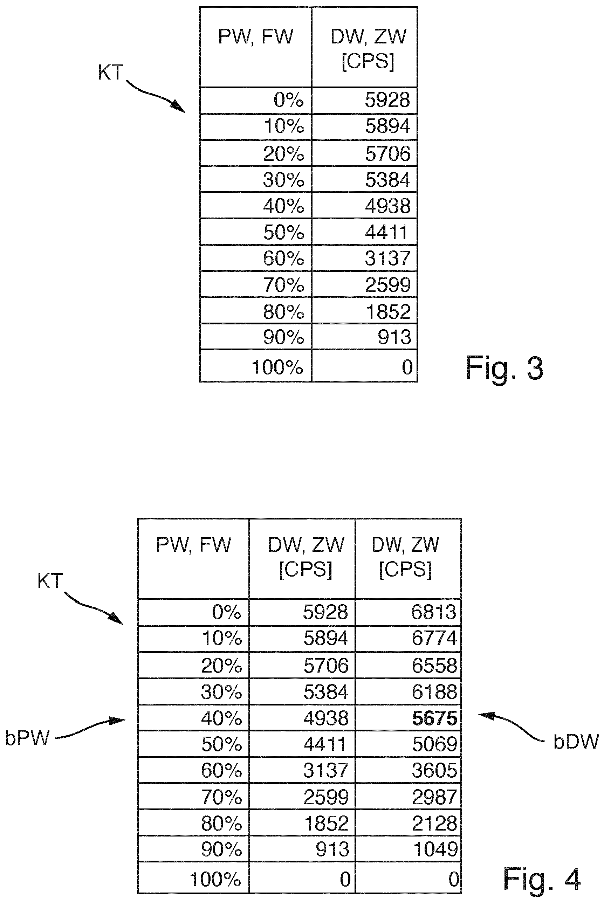

Fig. 1 bis 5 zeigen das erfindungsgemäße Verfahren zum Kalibrieren der Vorrichtung 1 zum Messen des Prozesswerts PW des mindestens einen Stoffes ST. Das Verfahren weist den Schritt auf:
Berechnen einer Kalibrierzuordnung KT mindestens mittels Simulierens des Durchdringens und dabei modellierend die Streuung SC der Gammastrahlen GR, insbesondere mittels des Systems 100, insbesondere der Vorrichtung 1, insbesondere eines Computers bzw. einer Recheneinrichtung REG der Vorrichtung 1, wie in Fig. 1 und 2 gezeigt. Die Kalibrierzuordnung KT ordnet verschiedenen Prozesswerten PW jeweils einen Detektorwert DW zu, wie in Fig. 3 und 4 gezeigt.

Im Detail weist das Verfahren den Schritt auf:
- Emittieren der Gammastrahlen GR mit der diskreten Isotop-Gamma-Energie IGE in mindestens den Stoff ST mittels der mindestens einen Strahlungsquelle S.

In anderen Worten:
Die Gammastrahlen sind mit der diskreten Isotop-Gamma-Energie IGE in mindestens den Stoff ST mittels der mindestens einen Strahlungsquelle S emittiert.

Des Weiteren weist das Verfahren den Schritt auf:
Vorgeben, insbesondere Eingeben, mindestens einer anwendungsspezifischen Materialeigenschaft MST, MBE, M2, MS, mindestens einer anwendungsspezifischen Messgeometrie GST, GBE, G2, GS, mindestens einer anwendungsspezifischen Abmessung AST, ABE, A2, AS und/oder mindestens einer anwendungsspezifischen Position PST, PBE, P2, PS, insbesondere jeweils, des Stoffes ST, des Hohlkörpers BE, der Detektoreinrichtung 2 und/oder der Strahlungsquelle S, insbesondere mittels einer Eingabeeinrichtung 9 des Systems 100, insbesondere der Vorrichtung 1, wie in Fig. 2 gezeigt.

Das Simulieren wird basierend auf der anwendungsspezifischen Vorgabe, insbesondere der anwendungsspezifischen Eingabe, MST, MBE, M2, MS, GST, GBE, G2, GS, AST, ABE, A2, AS, PST, PBE, P2, PS ausgeführt.

Insbesondere kann die Eingabeeinrichtung eine Tastatur, eine Maus, einen Touchscreen, eine Spracheingabeeinrichtung und/oder eine Kamera aufweisen, insbesondere sein. Zusätzlich oder alternativ können die Eingabeeinrichtung 9 und die Recheneinrichtung REG zum Zusammenwirken miteinander ausgebildet sein.

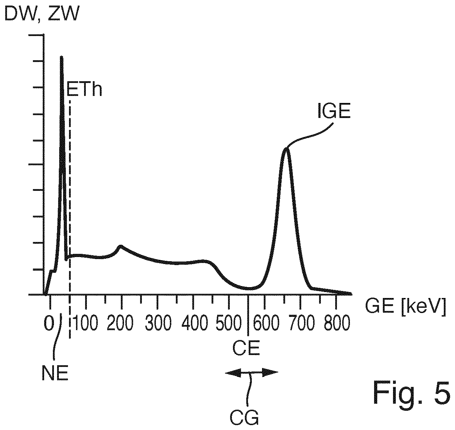

Außerdem weist die Detektoreinrichtung 2 ein Detektor-Rauschen mit einem Rausch-Energiewert NE auf und ist zum Messen des Detektorwerts DW nur basierend auf erfassten Gammastrahlen GR, deren Gamma-Energien GE gleich oder größer als ein Energieschwellenwert ETh sind, wobei der Energieschwellenwert ETh gleich oder größer als der Rausch-Energiewert NE ist, ausgebildet, wie in Fig. 5 gezeigt.

Zusätzlich oder alternativ ist die Detektoreinrichtung 2 zum Messen des Detektorwerts DW mindestens basierend auf erfassten Gammastrahlen GR, deren Gamma-Energien GE kleiner als ein Compton-Energiewert CE einer Compton-Lücke CG der Gammastrahlen GR sind, ausgebildet. Dies ermöglicht für den Detektorwert zu gewährleisten, dass bei diesem gestreute Gammastrahlen berücksichtigt werden.

Insbesondere ist die Compton-Lücke CG in einem Spektrum einer jeweiligen Häufigkeit, insbesondere Zählrate, über einer jeweiligen Energie GE von den Gammastrahlen GR nach Durchdringen bzw. Durchgehen durch einen, insbesondere den, Stoff ST typischerweise eine Lücke unmittelbar unterhalb eines Peaks, welcher die maximale, d.h. einer Emissions- bzw. Austrittsenergie aus der Strahlungsquelle S entsprechende, Energie, in dem gezeigten Ausführungsbeispiel die diskrete Isotop-Gamma-Energie IGE, angibt, wie in Fig. 5 gezeigt. Erst unterhalb der Compton-Lücke CG, also bei niedrigeren Energien als der maximale Peak abzüglich der Compton-Lücke, treten wieder signifikante Häufigkeiten, insbesondere Zählraten, im Spektrum auf. Innerhalb der Compton-Lücke CG liegt der Compton-Energiewert CE, welcher typischerweise als Energiewert bei einer minimalen Häufigkeit, insbesondere Zählrate, innerhalb der Compton-Lücke CG oder auch als Minimum einer angefitteten, beispielsweise U-förmigen Funktion innerhalb der Compton-Lücke CG definiert werden kann. Dadurch wird insbesondere eine Abgrenzung zwischen Gammastrahlen GR, welche nicht gestreut haben und somit eine Energie oberhalb des Compton-Energiewerts CE haben, und Gammastrahlen GR, welche gestreut haben und somit eine Energie unterhalb des Compton-Energiewerts CE haben, erreicht.

In anderen Worten:
Fig. 5 zeigt ein typisches Energiespektrum von Detektorwerten DW, insbesondere Zählratenwerten ZW, in Abhängigkeit von Energien, insbesondere welches von der Detektoreinrichtung 2 gemessen wird. Auf der horizontalen Achse ist dabei die jeweilige Energie GE der Gammastrahlen GR in der Einheit keV angetragen, an der vertikalen Achse ist der jeweilige Detektorwert DW, insbesondere der jeweilige Zählratenwert ZW, pro Energie bzw. Energiekanal angetragen. Dabei ist zunächst das Detektor-Rauschen bei kleinen Energien vorhanden, welches den Rausch-Energiewert NE aufweist, bei welchem das Detektor-Rauschen endet. Das Detektor-Rauschen befindet sich unterhalb des Rausch-Energiewerts NE bzw. des Energieschwellenwerts ETh. Anschließend bzw. darüber sind Detektorwerte DW, insbesondere Zählratenwerte ZW, von gestreuter Gammastrahlung GR vorhanden, welche sich auf einem im Vergleich zum Detektor-Rauschen vergleichsweise niedrigen Niveau befinden. In dem gezeigten Ausführungsbeispiel bei Verwendung von CS 137 für die mindestens eine Strahlungsquelle S beginnt bei etwa 500 keV die Compton-Lücke CG, auch als Compton-Gap CG bezeichnet, in welcher der Zählratenwert ZW nahezu null wird. Mittig innerhalb dieser Compton-Lücke CG befindet sich der Compton-Energiewert CE. Anschließend bzw. darüber hat das Spektrum noch einen Peak mit hohem Detektorwert DW, insbesondere hohem Zählratenwert ZW, welcher bei der Isotop-Gamma-Energie IGE, in dem gezeigten Ausführungsbeispiel bei Verwendung von Cs 137 für die mindestens eine Strahlungsquelle S bei 662 keV, liegt. Dies sind die nicht-gestreuten Gammastrahlen GR.

In alternativen Ausführungsbeispielen kann die Detektoreinrichtung mindestens einen Szintillator, insbesondere mindestens einen organischen Szintillator und/oder Polymer-Szintillator, aufweisen, insbesondere mittels welcher ein gemessenes bzw. detektiertes Energiespektrum einen weniger ausgeprägten Peak oder keinen Peak bei einer diskreten Isotop-Gamma-Energie aufweist bzw. hat. Anders formuliert: eine signifikante Häufigkeit, insbesondere Zählrate, kann mit der Compton-Lücke enden.

Da in dem gezeigten Ausführungsbeispiel die Gammastrahlen bzw. Gammaquanten GR in dem mindestens einen Szintillator SZ sowohl über den Photo-Effekt als auch über die Compton-Streuung detektiert bzw. gemessen, insbesondere erfasst, werden, könnte es sein, dass die Gammastrahlen GR nur einen Bruchteil ihrer Energie in dem mindestens einen Szintillator SZ deponieren könnten. Dadurch würden sie fälschlicherweise als Gammastrahlen GR mit zu niedriger Energie detektiert. Diesem Effekt kann man entgegenwirken, indem man das Detektormaterial mit hoher Dichte, insbesondere mit Elementen mit hoher Ordnungszahl Z, verwendet. Dann überwiegt der Photo-Effekt gegenüber der Compton-Streuung, womit die volle Energie detektiert wird.

Dies ermöglicht, dass das Erfassen nicht, insbesondere im Detail, berücksichtigt, insbesondere simuliert, zu werden braucht.

In alternativen Ausführungsbeispielen kann das Erfassen, insbesondere ein Lichterzeugen, insbesondere mittels des mindestens einen Szintillators, insbesondere des mindestens einen organischen Szintillators und/oder Polymer-Szintillators, berücksichtigt, insbesondere simuliert, werden.

Weiter haben die Gammastrahlen GR an dem Stoff ST und/oder dem Hohlkörper BE gestreut, wie in Fig. 1 gezeigt.

Zusätzlich oder alternativ weist das Verfahren auf:
modellierend die Streuung SC der Gammastrahlen GR an dem Stoff ST und/oder dem Hohlkörper BE.

Zudem haben die Gammastrahlen GR mindestens durch Compton-Streuung CSC gestreut, wie in Fig. 1 gezeigt.

Zusätzlich oder alternativ weist das Verfahren auf:
modellierend die Streuung SC der Gammastrahlen GR mindestens durch Compton-Streuung CSC.

In dem gezeigten Ausführungsbeispiel ist die Detektoreinrichtung 2 zum Messen des Detektorwerts DW mittels Erfassens zusätzlich von Gammastrahlen GR, wobei die Gammastrahlen GR mindestens den Stoff ST mindestens teilweise, insbesondere und den Hohlkörper BE mindestens teilweise, durchdrungen und dabei nicht gestreut haben, insbesondere und Erzeugens des Detektorwerts DW basierend auf den erfassten Gammastrahlen GR, ausgebildet.

Zusätzlich oder alternativ weist das Verfahren auf:
Berechnen der Kalibrierzuordnung KT mittels Simulierens des Durchdringens der, insbesondere nicht-gestreuten bzw. ungestreuten Gammastrahlen GR, insbesondere ohne Modellierung.

Weiter zusätzlich oder alternativ weist das Verfahren auf:
Berechnen der Kalibrierzuordnung KT mittels Simulierens des Durchdringens und dabei modellierend Absorption, insbesondere mindestens durch den Photo-Effekt, von, insbesondere gestreuten, Gammastrahlen GR.

Des Weiteren wird das Simulieren mindestens mittels einer Monte-Carlo-Simulation ausgeführt, wie in Fig. 2 gezeigt.

Außerdem weist das Verfahren den Schritt auf:
Bei einem bekannten Prozesswert bPW Messen eines Detektorwerts bDW, insbesondere mindestens basierend auf erfassten Gammastrahlen GR, wobei die Gammastrahlen GR gestreut haben, insbesondere mittels der Detektoreinrichtung 2, wie in Fig. 4 gezeigt.

Die Kalibrierzuordnung KT wird basierend auf dem gemessenen Detektorwert bDW berechnet, insbesondere normiert.

Fig. 3 zeigt die Kalibrierzuordnung KT, bei welcher jedem Prozesswert PW zwischen 0 Prozent (%) und 100 %, in dem gezeigten Ausführungsbeispielen in Abständen von 10 %, ein jeweiliger, insbesondere jeweils berechneter, insbesondere nicht-normierter, Detektorwert DW, insbesondere Zählratenwert ZW (CPS = counts per second = Zählungen pro Sekunde) zugeordnet ist. Die angegebenen Werte entstammen der Berechnung mittels des Simulierens.

Zunächst wird nun beispielhaft ein Prozesswert bPW von 40 % angefahren, welcher bekannt ist. Der Detektorwert bDW wird bei diesem Prozesswert bPW gemessen und der berechnete Detektorwert DW wird so normiert bzw. skaliert, dass der gemessene Wert bDW bei dem bekannten Prozesswert bPW von 40 % dem Tabelleneintrag entspricht. Die anderen Tabelleneinträge werden entsprechend mitnormiert bzw. mitskaliert. Dabei entsteht die in Fig. 4 dargestellte Kalibrierzuordnung KT, in welcher eine weitere Spalte mit, insbesondere normierten, Detektorwerten DW, insbesondere Zählratewerten ZW, angegeben ist.

Zusätzlich oder alternativ, insbesondere zu dem Normieren, kann das Simulieren basierend auf dem gemessenen Detektorwert bDW ausgeführt werden, wie in Fig. 2 gezeigt, insbesondere derart, dass bei dem bekannten Prozesswert bPW der gemessene Detektorwert bDW als Ziel-Ergebnis des Simulierens erreicht wird, insbesondere durch Rückführen des gemessenen Detektorwerts bDW.

Zudem zeigen Fig. 1 und 5 das erfindungsgemäße Verfahren zum Messen des Prozesswerts PW des mindestens eines Stoffes ST mittels der Vorrichtung 1, wobei das Verfahren aufweist:
- das Verfahren zum Kalibrieren der Vorrichtung 1 wie zuvor beschrieben, und
- Messen des Prozesswerts PW mittels Messens des Detektorwerts DW und Bestimmens des Prozesswerts PW mittels der Kalibrierzuordnung KT basierend auf dem gemessenen Detektorwert DW, insbesondere mittels der Vorrichtung 1.

Die Detektoreinrichtung 2, welcher für das hier beschriebene Verfahren verwendet werden kann, kann beispielsweise zusätzlich oder alternativ das folgenden Merkmal aufweisen bzw. besitzen:
- Die Detektoreinrichtung 2 kann beispielsweise die, insbesondere jeweiligen, Energien der detektierten Gammastrahlen GR auflösen. Typischerweise ist eine Pulsamplitude proportional zur Energie. Die Energie kann aber auch über andere Verfahren bestimmt werden, zum Beispiel Time-over-Threshold.

Insgesamt kann über die beschriebene Vorgehensweise eine sehr gute Kalibrierung zur genauen und schnellen Messung von Prozesswerten PW erreicht werden, insbesondere ohne dass hierfür das Anfahren mehrerer Prozesswerte PW in der Anlage erforderlich wäre. Dies stellt im Vergleich zu anderen, insbesondere bekannten, Vorgehensweisen eine erhebliche Verbesserung, insbesondere Vereinfachung, dar.

## Patentansprüche

1. Verfahren zum Kalibrieren einer Vorrichtung (1) zum Messen eines Prozesswerts (PW) mindestens eines Stoffes (ST),
- wobei die Vorrichtung (1) eine Detektoreinrichtung (2) aufweist, wobei die Detektoreinrichtung (2) zum Messen eines Detektorwerts (DW) mittels Erfassens mindestens von Gammastrahlen (GR), wobei die Gammastrahlen (GR) mindestens den Stoff (ST) mindestens teilweise durchdrungen und dabei gestreut haben, und Erzeugens des Detektorwerts (DW) basierend auf den erfassten Gammastrahlen (GR) ausgebildet ist,
- wobei das Verfahren den Schritt aufweist: Berechnen einer Kalibrierzuordnung (KT) mindestens mittels Simulierens des Durchdringens und dabei modellierend die Streuung (SC) der Gammastrahlen (GR), wobei die Kalibrierzuordnung (KT) verschiedenen Prozesswerten (PW) jeweils einen Detektorwert (DW) zuordnet.

2. Verfahren nach Anspruch 1,
- wobei die Gammastrahlen (GR) einen Hohlkörper (BE) mindestens teilweise durchdrungen und dabei gestreut haben, wobei der Stoff (ST) innerhalb des Hohlkörpers (BE) angeordnet ist.

3. Verfahren nach einem der vorhergehenden Ansprüche, insbesondere nach Anspruch 2,
- wobei die Gammastrahlen (GR) an dem Stoff (ST) und/oder dem Hohlkörper (BE) gestreut haben, und/oder
- wobei das Verfahren aufweist: modellierend die Streuung (SC) der Gammastrahlen (GR) an dem Stoff (ST) und/oder dem Hohlkörper (BE).

4. Verfahren nach einem der vorhergehenden Ansprüche,
- wobei die Gammastrahlen (GR) mindestens durch Compton-Streuung (CSC) gestreut haben, und/oder
- wobei das Verfahren aufweist: modellierend die Streuung (SC) der Gammastrahlen (GR) mindestens durch Compton-Streuung (CSC).

5. Verfahren nach einem der vorhergehenden Ansprüche,
- wobei das Simulieren mindestens mittels einer Monte-Carlo-Simulation (MC) ausgeführt wird.

6. Verfahren nach einem der vorhergehenden Ansprüche,
- wobei die Detektoreinrichtung (2) mindestens einen Szintillator (SZ) zum Erfassen der Gammastrahlen (GR) aufweist, insbesondere wobei der Szintillator (SZ) eine Dichte von minimal 3 g/cm³, insbesondere von minimal 5 g/cm³, und/oder von maximal 20 g/cm³, insbesondere von maximal 10 g/cm³, insbesondere von 7 g/cm³, aufweist.

7. Verfahren nach einem der vorhergehenden Ansprüche,
- wobei die Detektoreinrichtung (2) ein Detektor-Rauschen mit einem Rausch-Energiewert (NE) aufweist und zum Messen des Detektorwerts (DW) nur basierend auf erfassten Gammastrahlen (GR), deren Gamma-Energien (GE) gleich oder größer als ein Energieschwellenwert (ETh) sind, wobei der Energieschwellenwert (ETh) gleich oder größer als der Rausch-Energiewert (NE) ist, ausgebildet ist.

8. Verfahren nach einem der vorhergehenden Ansprüche,
- wobei die Gammastrahlen (GR) mit einer diskreten Isotop-Gamma-Energie (IGE) in mindestens den Stoff (ST) mittels mindestens einer Strahlungsquelle (S) emittiert sind.

9. Verfahren nach einem der vorhergehenden Ansprüche, insbesondere nach Anspruch 2 oder einem von Anspruch 2 abhängigen Anspruch und/oder Anspruch 8,
- wobei das Verfahren den Schritt aufweist: Vorgeben mindestens einer anwendungsspezifischen Materialeigenschaft (MST, MBE, M2, MS), mindestens einer anwendungsspezifischen Messgeometrie (GST, GBE, G2, GS), mindestens einer anwendungsspezifischen Abmessung (AST, ABE, A2, AS) und/oder mindestens einer anwendungsspezifischen Position (PST, PBE, P2, PS) des Stoffes (ST), des Hohlkörpers (BE), der Detektoreinrichtung (2) und/oder der Strahlungsquelle (S), und
- wobei das Simulieren basierend auf der anwendungsspezifischen Vorgabe (MST, MBE, M2, MS, GST, GBE, G2, GS, AST, ABE, A2, AS, PST, PBE, P2, PS) ausgeführt wird.

10. Verfahren nach einem der vorhergehenden Ansprüche,
- wobei der Detektorwert (DW) ein Zählratenwert (ZW) ist oder von dem Zählratenwert (ZW) abhängig ist.

11. Verfahren nach einem der vorhergehenden Ansprüche,
- wobei der Prozesswert (PW) ein Füllstandwert (FW) oder ein Dichtewert ist.

12. Verfahren nach einem der vorhergehenden Ansprüche,
- wobei das Verfahren den Schritt aufweist: bei einem bekannten Prozesswert (bPW) Messen eines Detektorwerts (bDW), insbesondere mindestens basierend auf erfassten Gammastrahlen (GR), wobei die Gammastrahlen (GR) gestreut haben, insbesondere mittels der Detektoreinrichtung (2), und
- wobei die Kalibrierzuordnung (KT) basierend auf dem gemessenen Detektorwert (bDW) berechnet, insbesondere normiert, wird, insbesondere wobei das Simulieren basierend auf dem gemessenen Detektorwert (bDW) ausgeführt wird, insbesondere derart, dass bei dem bekannten Prozesswert (bPW) der gemessene Detektorwert (bDW) als Ziel-Ergebnis des Simulierens erreicht wird, insbesondere durch Rückführen des gemessenen Detektorwerts (bDW).

13. Verfahren zum Messen eines Prozesswerts (PW) mindestens eines Stoffes (ST) mittels einer Vorrichtung (1), wobei das Verfahren aufweist:
- ein Verfahren zum Kalibrieren der Vorrichtung (1) nach einem der vorhergehenden Ansprüche, und
- Messen des Prozesswerts (PW) mittels Messens des Detektorwerts (DW) und Bestimmens des Prozesswerts (PW) mittels der Kalibrierzuordnung (KT) basierend auf dem gemessenen Detektorwert (DW), insbesondere mittels der Vorrichtung (1).

14. System (100),
- wobei das System (100) eine Vorrichtung (1) zum Messen eines Prozesswerts (PW) mindestens eines Stoffes (ST) aufweist, und
- wobei das System (100) zum Ausführen eines Verfahrens nach einem der vorhergehenden Ansprüche ausgebildet ist.

15. System (100) nach Anspruch 14, wobei das System (100) aufweist:
- einen Hohlkörper (BE), und/oder
- mindestens eine Strahlungsquelle (S), welche zum Emittieren von Gammastrahlen (GR) mit einer diskreten Isotop-Gamma-Energie (IGE) in mindestens den Stoff (ST) ausgebildet ist.
